(19) Europäisches Patentamt
European Patent Office
Office européen des brevets

(11) **EP 3 020 960 B1**

(12) **EUROPEAN PATENT SPECIFICATION**

(45) Date of publication and mention
of the grant of the patent:
**15.05.2019 Bulletin 2019/20**

(51) Int Cl.:
***F03D 7/02*** *(2006.01)*      ***F03D 17/00*** *(2016.01)*

(21) Application number: **15179447.6**

(22) Date of filing: **03.08.2015**

(54) **FLOATING-BODY TYPE WIND TURBINE POWER GENERATING APPARATUS AND OPERATION METHOD OF THE SAME**

SCHWEBEKÖRPER-WINDTURBINENSTROMERZEUGUNGSVORRICHTUNG UND BETRIEBSVERFAHREN DAFÜR

APPAREIL DE GÉNÉRATION D'ÉNERGIE ÉOLIENNE À CORPS FLOTTANT ET SON PROCÉDÉ DE FONCTIONNEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.11.2014 JP 2014233103**

(43) Date of publication of application:
**18.05.2016 Bulletin 2016/20**

(73) Proprietor: **MITSUBISHI HEAVY INDUSTRIES, LTD.**
**Tokyo 108-8215 (JP)**

(72) Inventors:
• **NAKAMURA, Akihiro**
**TOKYO, 108-8215 (JP)**
• **HAYASHI, Yoshiyuki**
**TOKYO, 108-8215 (JP)**

(74) Representative: **Intès, Didier Gérard André et al**
**Cabinet Beau de Loménie**
**158 rue de l'Université**
**75340 Paris Cedex 07 (FR)**

(56) References cited:
**EP-A1- 2 489 872**      **EP-A1- 2 620 639**
**EP-A2- 2 469 083**      **WO-A1-2014/023313**
**WO-A2-2010/076557**      **US-A1- 2013 236 309**

**Description**

TECHNICAL FIELD

The present disclosure relates to a floating-body type wind turbine power generating apparatus and an operation method of the same.

BACKGROUND

When a wind turbine power generating apparatus is placed on the ocean, for instance, a bottom-mounted wind turbine power generating apparatus is generally employed in a region where the water is not so deep. A bottom-mounted wind turbine power generating apparatus is disposed on a base installed on the water bottom. In contrast, in a region with a great water depth, such a bottom-mounted wind turbine power generating apparatus is not economic, and thus one would consider employing a floating-body type wind turbine power generating apparatus in which a wind turbine generator is disposed on a floating body floating on the water surface.

Patent Document 1 discloses a floating-body type wind turbine power generating apparatus including a pitch controller for controlling pitch angles of blades mounted to a wind turbine rotor. In this floating-body type wind turbine power generating apparatus, the pitch controller controls the pitch angles on the basis of the rotation speed of the wind turbine rotor. For instance, during operation at a wind velocity less than a rated wind velocity, the pitch angles are maintained substantially constant at an angle such that the maximum electric power is supplied. On the other hand, during operation at a rated wind velocity or higher, the pitch angles of the blades are controlled so as to maintain a constant rotor rotation speed (rated rotor rotation speed) to generate a constant generator output (a rated output).

Citation List

Patent Literature

Patent Document 1: WO2010/076557A
EP 2 469 083 A2 discloses an offshore wind turbine and a method of operating same.

SUMMARY

In a floating-body type wind turbine power generating apparatus, there is a close correlation between sway of a floating body and an aerodynamic load (thrust force) of a thrust component received by a rotor. Thus, the following phenomenon may occur when a mode in which pitch angles of blades are controlled so as to maintain the rotation speed of a rotor at a rated rotation speed is executed for the floating-body type wind turbine power generating apparatus.

If the wind velocity relative to the rotor increases in accordance with the movement (inclination) of the wind turbine generator toward the upwind side due to sway of the floating body while the mode in which the pitch angles of the blades are controlled so as to maintain the rotation speed of the rotor at a rated rotation speed is executed, the pitch angles of the blades would be controlled to increase so as to maintain the rotor rotation speed of the rotor at a rated rotation speed. If the pitch angles of the blades are increased while the wind turbine generator is moving toward the upwind side, the movement of the wind turbine generator toward the upwind side would be enhanced because the thrust force received by the rotor from wind decreases, causing the wind turbine generator to incline greatly toward the upwind side.

In contrast, if the wind velocity relative to the rotor decreases in accordance with the movement (inclination) of the wind turbine generator toward the downwind side due to sway of the floating body while the mode in which the pitch angles of the blades are controlled so as to maintain the rotation speed of the rotor at a rated rotation speed is executed, the pitch angles of the blades would be controlled to decrease so as to maintain the rotor rotation speed of the rotor at a rated rotation speed. If the pitch angles of the blades are reduced while the wind turbine generator is moving toward the downwind side, the movement of the wind turbine generator toward the downwind side would be enhanced because the thrust force received by the rotor from wind increases, causing the wind turbine generator to incline greatly toward the downwind side.

As described above, if a floating-body type wind turbine power generating apparatus sways while the mode in which the pitch angles of the blades are controlled so as to maintain the rotation speed of the rotor at a rated rotation speed is executed, the sway of the floating-body type wind turbine power generating apparatus may be promoted in accordance with the control of the pitch angles. Due to the promotion (aerodynamic negative damping) of the sway of the floating-body type wind turbine power generating apparatus caused by such pitch control, self-excited vibration having a floating-body sway natural period may be generated in the floating body. In this case, a cyclic load is applied to the wind turbine generator in accordance with the cyclic sway of the floating body caused by the self-excited vibration. Thus, depending on the amplitude of the sway of the floating body or its elapsed time, a fatigue load larger than a setting value may be applied to the wind turbine generator, which may result in excess over a fatigue limit of the wind turbine generator.

To prevent damage to the wind turbine generator due to such a fatigue load, it is desirable to detect abnormal sway of the floating body, which is abnormal vibration, appropriately by monitoring the sway of the floating body caused by the pitch control.

In this regard, Patent Document 1 describes no measure for detecting abnormal vibration of a floating body caused by the pitch control.

In view of the above issues, an object of at least one embodiment of the present invention is to provide a floating-body type wind turbine power generating apparatus whereby it is possible to detect abnormal vibration of a floating body caused by a pitch control appropriately.

(1) A floating-body type wind turbine power generating apparatus according to at least one embodiment of the present invention includes: a floating body; a wind turbine generator erected on the floating body, the wind turbine generator including a rotor having a hub and a blade mounted to the hub; a control unit capable of executing a control mode in which a pitch angle of the blade is controlled so that a rotation speed of the rotor is maintained at a rated rotation speed; and a monitoring unit for monitoring vibration of the floating body.

The monitoring unit is configured to detect abnormal vibration due to execution of the control mode by the control unit, on the basis of a statistical value over a period of not less than a floating-body sway natural period of the floating body, the statistical value being based on a fluctuation amount of a value obtained from a signal representing at least one of an inclination angle and an inclination-angular velocity of the floating body. The statistical value represents a fluctuation component of the inclination angle or the inclination-angular velocity of the floating body generated upon floating-body sway due to the execution of the control mode.

The floating-body sway natural period being a period of a self-excited vibration of the floating body generated due to the execution of the control mode.

When a floating body and a wind turbine generator disposed on the floating body are inclined, a load corresponding to the inclination angle, the inclination-angular velocity or the like of the floating body is applied to the wind turbine generator. For instance, a load due to the moment of the self weight depends on the inclination angle of the floating body. Further, since the inclination-angular velocity of the floating body affects the relative wind velocity received by the rotor, the wind load received by the rotor depends on the inclination-angular velocity of the floating body. Stress is generated in response to the above loads in a wind turbine generator, and thus the stress in a wind turbine generator varies in accordance with the change in the inclination angle, the inclination-angular velocity or the like of the floating body. Thus, the magnitude of the stress amplitude which affects the fatigue strength of the wind turbine generator is correlated to the fluctuation component of the inclination angle, the inclination-angular velocity, or the like of the floating body in the floating-body sway caused by the pitch control.

With the above configuration (1), abnormal vibration of the floating body is detected using a statistical value based on fluctuation amount of the inclination angle or the inclination-angular velocity of the floating body in floating-body sway caused by the pitch control. This statistical value represents a fluctuation component of the inclination angle or the inclination-angular velocity of the floating body in floating-body sway caused by the pitch control. Thus, it is possible to detect abnormal vibration of the floating body caused by the pitch control appropriately by using the above statistical value based on a fluctuation component of the inclination angle or the inclination-angular velocity which may affect the stress amplitude generated in the wind turbine generator.

(2) In some embodiments, in the above configuration (1), the fluctuation amount is obtained from a difference between the value and a mean of the value over the period. Specifically, in some embodiments, the monitoring unit is configured to detect the abnormal vibration on the basis of a statistical value based on the fluctuation amount based on a difference between the value obtained from the signal and a mean value of the value over the period.

In the above configuration (2), to detect abnormal vibration of the floating body, the statistical value being used is based on a difference between the inclination angle or the inclination-angular velocity of the floating body in the floating-body sway caused by the pitch control, and a mean value of the inclination angle or the inclination-angular velocity. This statistical value represents a fluctuation component of the inclination angle or the inclination-angular velocity of the floating body in the floating-body sway caused by the pitch control. Thus, it is possible to detect abnormal vibration of the floating body caused by the pitch control appropriately by using the above statistical value representing a fluctuation component of the inclination angle or the inclination-angular velocity which may affect the stress amplitude generated in the wind turbine generator.

(3) In some embodiments, in the above configuration (1), the monitoring unit includes a first filter for eliminating or reducing a component of a period longer than the floating-body sway natural period of the floating-body from the signal. The fluctuation amount is obtained by processing the value with the first filter. Specifically, in some embodiments, the monitoring unit is configured to detect the abnormal vibration on the basis of the statistical value based on the fluctuation amount based on the value obtained from the signal processed by the first filter.

With the above configuration (3), to detect abnormal vibration of the floating body, the statistical value being used is obtained using a fluctuation amount based on a signal obtained by eliminating or reducing a component of a period longer than the floating-body sway natural period of the floating-body from the signal representing the inclination angle or the inclination-angular velocity of the floating body in the floating-body sway caused by the pitch control. This statistical value represents a fluctuation component of the inclination angle or the inclination-angular velocity of the floating body in the floating-body sway caused by the pitch control. Thus, it is possible to detect abnormal vibration of the floating body caused by the pitch control appropriately by using the above statistical value representing a fluctuation component of the inclination angle or the inclination-angular velocity which may affect the stress amplitude generated in the wind turbine generator.

(4) In some embodiments, in any one of the above configurations (1) to (3), the monitoring unit is configured to detect the abnormal vibration due to execution of the control mode by the control unit, on the basis of a statistical value in a period of not less than a floating-body sway natural period of the floating body, the statistical value being based on a fluctuation amount of a value obtained from a signal representing at least one of the inclination angle or the inclination-angular velocity of the floating body in a front-rear direction of the wind turbine generator.

While a floating-body type wind turbine generator may sway in various directions, the pitch control mainly promotes the sway in the front-rear direction of the wind turbine generator.

With the above configuration (4), evaluation is performed on the basis of the inclination angle or the inclination-angular velocity of the floating body in the front-rear direction of the wind turbine generator, which makes it possible to detect abnormal vibration of the floating body due to the pitch control more precisely.

In the present specification, "the front-rear direction of the wind turbine generator" refers to a direction orthogonal to the rotational plane of the rotor of the wind turbine generator. The expression "the front-rear direction" refers to the same in other parts of the specification as well unless otherwise noted.

(5) In some embodiments, in any one of the above configurations (1) to (4), the statistical value is "σ" represented by the following equation (A).

$$\sigma = \frac{1}{N}\left\{\sum_{i=1}^{N}|xa_i|^n\right\}^{\frac{1}{n}} \qquad \cdot \cdot \cdot (\text{A})$$

In equation (A), $xa_i$ is the fluctuation amount of the value representing the inclination angle or the inclination-angular velocity of the floating body, and N is the number of data of xa; in the period.

In the above configuration (5), a statistical value representing dispersion of the inclination angle or the inclination-angular velocity of the floating body is used as the statistical value based on the fluctuation amount of the inclination angle or the inclination-angular velocity of the floating-body. The magnitude of dispersion of the inclination angle or the like corresponds to the magnitude of dispersion of a load applied to the wind turbine due to the inclination angle or the like, and of stress caused in accordance with the load. Thus, the greater the dispersion of the inclination angle or the like is, the greater the stress amplitude of the stress generated in the wind turbine generator would be.

Accordingly, with the above configuration (5), it is possible to detect abnormal vibration of the floating body caused by the pitch control appropriately, using the statistical value representing dispersion of the inclination angle or the inclination-angular velocity.

(6) In some embodiments, in any one of the above configurations (1) to (5), the length of the period is not less than 150 seconds and not more than 3,600 seconds.

If a period for calculating the statistical value related to the inclination angle or the inclination-angular velocity of the floating body (hereinafter, also referred to as a statistical period) is too short, the number of samples in the statistical period may be so few that the statistical value to be calculated is affected and that appropriate evaluation is not possible. For instance, in a case where "σ" represented by the above equation (A) is used as the statistical value, the smaller number of the samples may result in a larger value, which makes it necessary to increase the threshold value.

With the above configuration (6), the statistical period is not less than 150 seconds, which is an adequately long period of time. In this way, it is possible to secure a sufficient number of samples for calculating the statistical value over the statistical period, and to detect abnormal vibration of the floating body due to the pitch control more appropriately. Further, since the statistical period is adequately long, it is possible to avoid detection of a sudden external-force response such as a wave response, which makes it possible to appropriately monitor continuous unstable vibration which causes an increase of a fatigue load applied to the wind turbine generator.

On the other hand, if the statistical period for calculating the statistical value related to the inclination angle or the inclination-angular velocity of the floating body is too long, when the wind condition radically changes in the statistical period, appropriate evaluation may be impossible due to the calculated statistical value being affected by the radical change in the wind condition. For instance, assuming that there is a period during which the wind velocity and the wave height are low and the inclination angle of the floating body is substantially zero in a statistical period, values would be averaged over the entire period to calculate the mean value of the inclination angle, including the period with the inclination angle being zero. Thus, even if there is a time when the wind velocity or the wave height has rapidly increased in the other periods, it may be difficult to determine the influence of the rapid increase.

In this regard, with the above configuration (6), the statistical period is not more than 3,600 seconds, and thus it is possible to detect abnormal vibration of the floating body caused by the pitch control more appropriately, taking account of a change in the wind condition in the statistical period.

(7) In some embodiments, in the above configuration (5) or (6), the monitoring unit is configured to determine that the abnormal vibration has occurred if the statistical value $\sigma$ is greater than a threshold value, the statistical value being based on a difference between the value in the period and a value representing the inclination angle of the floating body. The threshold value is set to be within a range of not less than 0.5 degree and not more than 5 degrees.

As a result of intensive researches of the present inventors, it was found that it is possible to determine occurrence of abnormal vibration accurately by using a value in the above range as a threshold value to be compared with the calculated statistical value $\sigma$. Thus, with the above configuration (7), it is possible to determine occurrence of abnormal vibration accurately.

(8) In some embodiments, in the above configuration (7), the monitoring unit is configured such that the threshold value is variable in accordance with a mean value of the pitch angle or a wind velocity of wind received by the rotor over the period.

There is a certain correlation between the magnitude of the floating-body sway due to the pitch control and the wind velocity.

With the above configuration (8), a threshold value is variable in accordance with a mean value of the wind velocity. Thus, it is possible to improve the accuracy in detecting abnormal vibration of the floating body.

(9) In some embodiments, in the above configuration (8), in a region where the mean value of the wind velocity is not less than a rated wind velocity of the wind turbine generator, the threshold value is set to be the maximum at a wind velocity $V_1$ which is not less than the rated wind velocity and to decrease with an increase in the wind velocity.

In a common wind turbine generator which is referred to as a variable-speed wind turbine, variable-speed operation is performed. In the variable-speed operation, the output is controlled and the rotor rotation speed is maintained at an optimum value in accordance with the wind velocity in a low wind-velocity region in which the wind velocity is less than the rated wind velocity, while the pitch angle is controlled so as to maintain the rotor rotation speed at a constant speed in a high wind-velocity region in which the wind velocity is the rated wind velocity or higher.

The floating-body sway due to control of the rotor rotation speed through the pitch occurs upon execution of the control mode in which the rotor rotation speed is controlled through the pitch, i.e., when the wind velocity is not less than the rated wind velocity. Further, there is a tendency that the floating-body sway due to the pitch control is the most likely to occur at the rated wind velocity, and is less likely to occur as the wind velocity increases in a high wind-velocity region in which the wind velocity is not less than the rated wind velocity. Thus, the higher the wind velocity is, the more it is desirable to detect abnormal sway of the floating body with high sensitivity.

With the above configuration (9), the threshold value in a region where the mean value of the wind velocity is not less than the rated wind velocity is set so as to reach the maximum at a wind velocity $V_1$ which is not less than the rated wind velocity, and to decrease with an increase in the pitch angle or the wind velocity, which makes it possible to detect abnormal vibration with sensitivity that increases with the mean value of the wind velocity. Thus, it is possible to improve accuracy in detection of abnormal vibration of the floating body.

(10) In some embodiments, in any one of the above configurations (1) to (9), the monitoring unit includes a second filter for eliminating or reducing at least a frequency component of a wave acting on the floating body from the signal, and is configured to detect the abnormal vibration on the basis of a statistical value based on the fluctuation amount based on a value obtained from the signal processed by the second filter.

With the above configuration (10), evaluation is performed on the basis of the signal obtained by eliminating or reducing a frequency component of waves from the signal representing the inclination angle or the inclination-angular velocity. The frequency component of wave may become a serious obstacle in evaluation of the floating body. Thus, it is possible to detect abnormal vibration of the floating-body due to the pitch control more precisely.

(11) In some embodiments, in any one of the above configurations (1) to (10), the floating-body type wind turbine power generating apparatus further includes: a sensor for measuring a physical amount representing at least one of the inclination angle or the inclination-angular velocity of the floating body; and a signal-obtaining part for obtaining the signal representing at least one of the inclination angle or the inclination-angular velocity of the floating body, on the basis of a detection signal from the sensor.

In this case, it is possible to calculate the statistical value for detecting abnormal vibration of the floating body

on the basis of the detection signal from the sensor for measuring the inclination angle or the inclination-angular velocity of the floating body.

(12) In some embodiments, in the above configuration (11), the signal-obtaining part is configured to calculate, on the basis of a yaw angle of the wind turbine generator, an angular difference in a planar view between the front-rear direction of the wind turbine generator and an inclination direction in which the sensor performs measurement, and to obtain the signal in the front-rear direction of the wind turbine generator from the detection signal from the sensor on the basis of the angular difference.

In a wind turbine generator, when the yaw angle is controlled so as to orient the rotational plane of the rotor toward the upwind side, "the front-rear direction of the wind turbine generator" varies with respect to the tower or the floating body, in accordance with the yaw angle.

With the above configuration (12), it is possible to obtain a signal in the front-rear direction of the wind turbine generator corresponding to a yaw angle of the wind turbine generator from a signal representing the inclination angle or the inclination-angular velocity in a certain direction obtained by the sensor disposed on the tower or the floating body, on the basis of the yaw angle.

(13) In some embodiments, in any one of the above configurations (1) to (12), the monitoring unit is configured to detect the abnormal vibration on the basis of the statistical value only when the wind velocity of the wind received by the rotor is not less than the rated wind velocity or when the control mode is executed by the control unit.

With the above configuration (13), since the statistical value is calculated and compared to the threshold value only when the wind velocity is not less than the rated wind velocity or only when the pitch control is executed, it is possible to reduce a calculation load of the monitoring unit.

(14) In some embodiments, in any one of the above configurations (1) to (13), the monitoring unit is configured to output an alarm or to transmit a signal for stopping the wind turbine generator to the control unit when the abnormal vibration is detected.

With the above configuration (14), since an alarm is outputted when abnormal vibration is detected, it is possible to take a measure quickly after detection of abnormal vibration, such as procedures for stopping the wind turbine generator performed by workers who have recognized detection of the abnormal vibration from the alarm.

Alternately, with the above configuration (14), since a signal for stopping the wind turbine generator is transmitted to the control unit when abnormal vibration is detected, it is possible to stop the wind turbine generator promptly with the control unit.

(15) A method of operating a floating-body type wind turbine power generating apparatus according to at least one embodiment of the present invention is for a floating-body type wind turbine power generating apparatus which includes a floating body and a wind turbine generator erected on the floating body. The wind turbine generator includes a rotor having a hub and a blade mounted to the hub. The method includes: a pitch-control step of executing a control mode of controlling a pitch angle of the blade so as to maintain a rotation speed of the rotor at a rated rotation speed; a signal-obtaining step of obtaining a signal which represents at least one of an inclination angle and an inclination velocity of the floating body; and an abnormal-vibration detection step of detecting abnormal vibration due to execution of the control mode in the pitch-control step, on the basis of a statistical value over a period of not less than a floating-body sway natural period of the floating body, the statistical value being based on a fluctuation amount of a value obtained from the signal obtained in the signal-obtaining step. The statistical value represents a fluctuation component of the inclination angle or the inclination-angular velocity of the floating body generated upon floating-body sway due to the execution of the control mode.

The floating-body sway natural period being a period of a self-excited vibration of the floating body generated due to the execution of the control mode.

With the above configuration (15), abnormal vibration of the floating body is detected using a statistical value based on fluctuation amount of the inclination angle or the inclination-angular velocity of the floating body in floating-body sway caused by the pitch control. This statistical value represents a fluctuation component of the inclination angle or the inclination-angular velocity of the floating body in floating-body sway caused by the pitch control. Thus, it is possible to detect abnormal vibration of the floating body caused by the pitch control appropriately by using the above statistical value representing a fluctuation component of the inclination angle or the inclination-angular velocity which may affect the stress amplitude generated in the wind turbine generator.

According to at least one embodiment of the present invention, provided is a floating-body wind turbine power generating apparatus whereby it is possible to detect abnormal vibration of a floating body due to a pitch control appropriately.

BRIEF DESCRIPTION OF DRAWINGS

FIG. 1 is a perspective view of a floating-body type wind turbine power generating apparatus according to one embodiment.

FIG. 2 is a schematic diagram of a configuration of a floating-body type wind turbine power generating apparatus according to one embodiment.

FIG. 3 is a cross sectional view of a blade of a floating-body type wind turbine power generating apparatus according to one embodiment.

FIG. 4 is a block diagram of a configuration of a wind turbine generator, a floating body, a control unit and a monitoring unit according to one embodiment.

FIG. 5 is a chart of a transition of a threshold value of a statistical value with respect to a mean value of wind velocity according to one embodiment.

FIG. 6 is a diagram for describing the front-rear direction and the yaw angle of a wind turbine power generating apparatus.

FIG. 7A is an example of a waveform of a signal which indicates an inclination angle, and FIG. 7B is a diagram of a waveform which is the waveform of FIG. 7A processed by the second filter according to one embodiment.

FIG. 8 is a flowchart of a method of operating a floating-body type wind turbine power generating apparatus according to one embodiment.

DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

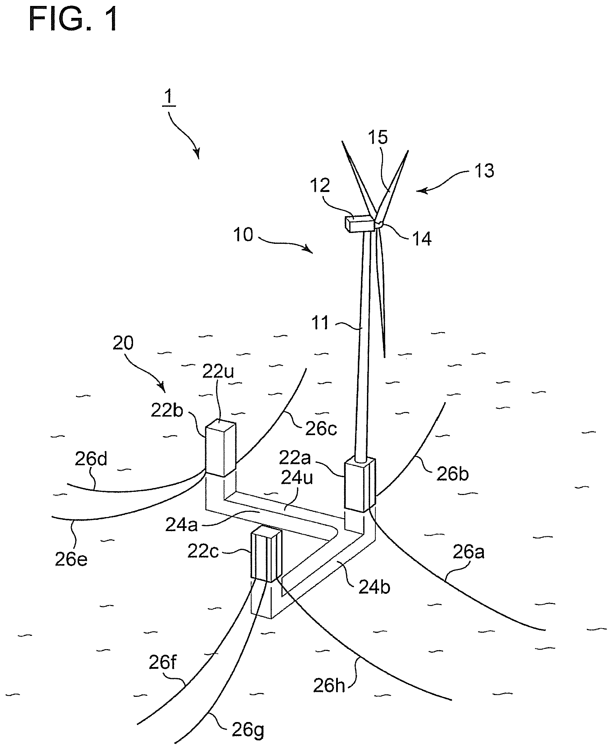

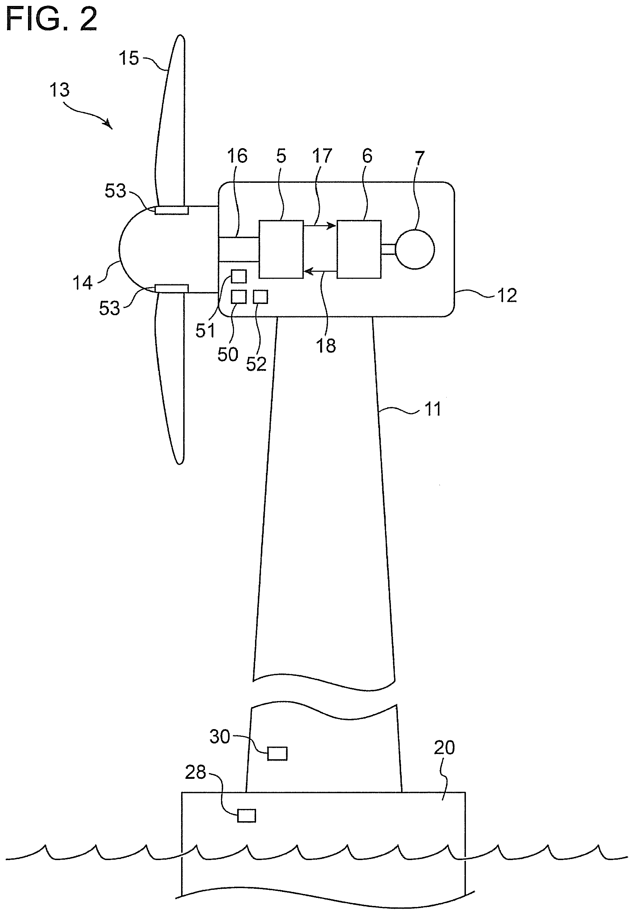

First, the schematic configuration of a floating-body type wind turbine power generating apparatus according to one embodiment will be described with reference to FIGs. 1 and 2. FIG. 1 is a perspective view of a floating-body type wind turbine power generating apparatus according to one embodiment. FIG. 2 is a schematic diagram of a configuration of a floating-body type wind turbine power generating apparatus according to one embodiment.

As illustrated in FIG. 1, the floating-body type wind turbine power generating apparatus 1 includes a floating body 20 floating on the water surface and a wind turbine generator 10 erected on the floating body 20. Further, the floating-body type wind turbine power generating apparatus 1 includes a control unit 50 and a monitoring unit 30 described below. Here, the floating body 20 is moored so as to be fixed to the water bottom by mooring devices 26 (26a to 26h).

The floating body 20 includes three columns 22 (22a to 22c), the first lower hull 24a connecting the column 22a and the column 22b, and the second lower hull 24b connecting the column 22a and the column 22c. In the top view, the floating body 20 is formed in a substantially V shape. The columns 22 and the lower hulls 24 are each formed to have a hollow structure so that the floating-body type wind turbine power generating apparatus 1 floats on the water surface due to the buoyance applied to the columns 22 and the lower hulls 24.

The upper surfaces 22u of the columns 22 are formed so as to be disposed above the upper surfaces 24u of the lower hulls 24, and the upper surfaces 24u of the lower hulls 24 are underwater and the upper surfaces 22u of the columns 22 are above the water surface while the floating-body wind turbine power generating apparatus is in an installed state. That is, the floating body 20 is a semi-submersible type floating body. Further, a wind turbine generator 10 is disposed on the column 22a positioned at the center among the above three columns 22.

The wind turbine generator 10 standing on the floating body 20 includes a tower 11 fixed on the column 22a, a nacelle 12 supported to the tower, and a rotor 13 mounted to the nacelle 12 rotatably. The rotor 13 includes a hub 14 mounted to the nacelle 12 rotatably and blades 15 mounted to the hub 14. Further, the nacelle 12 is supported by the tower 11 so as to be capable of slewing (capable of rotating in the yaw direction) about an axis of the tower 11, and configured to orient the rotor 13 toward the upwind side in accordance with the wind direction.

Now, described below with reference to FIG. 2 is a configuration for converting rotation energy of the rotor 13 into electrical energy in the wind turbine generator 10 according to one embodiment. FIG. 2 is a schematic diagram of a configuration of a floating-body type wind turbine power generating apparatus according to one embodiment. As illustrated in FIG. 2, a hydraulic pump 5 is coupled to the rotor 13 via the main shaft 16. A hydraulic motor 6 is connected to the hydraulic pump 5 via a high pressure oil line 17 and a low pressure oil line 18. Specifically, the outlet of the hydraulic pump 5 is connected to the inlet of the hydraulic motor 6 via the high pressure oil line 17, while the inlet of the hydraulic pump 5 is connected to the outlet of the hydraulic motor 6 via the low pressure oil line 18. The hydraulic pump 5 increases the pressure of working oil by being driven by a main shaft 16 so as to produce high pressure working oil (pressurized oil). The pressurized oil produced by the hydraulic pump 5 is supplied to the hydraulic motor 6 via the high pressure oil line 17, and this pressurized oil drives the hydraulic motor 6. The low pressure working oil having performed work in the hydraulic motor 6 is returned again to the hydraulic pump 5 via the low pressure oil line 18 disposed between the outlet of the hydraulic motor 6 and the inlet of the hydraulic pump 5.

A generator 7 is coupled to the hydraulic motor 6. The generator 7 is to convert rotation energy of the rotor 4 into electric energy. In one embodiment, the generator 7 is a synchronous generator driven by the hydraulic motor 6, and is connected to a utility grid without an electric-power converting circuit including an inverter being disposed therebetween.

Although the wind turbine generator 10 described here as one embodiment transmits the rotation energy of the rotor 13 to the generator 7 through a hydraulic transmission including the hydraulic pump 5 and the hydraulic motor 6, the wind turbine generator 10 may be configured to increase the rotation speed of the rotor 13 with a gear-type speed increasing unit and transmit the rotation to the generator 7 in another embodiment. Further, in yet another embodiment, the wind turbine generator 10 may be a direct-drive type wind turbine generator which drives the generator 7 by rotation of the rotor 13 without a drivetrain interposed therebetween.

The floating-body type wind turbine power generating apparatus 1 includes a control unit 50 for controlling pitch angles of the blades 15 and a monitoring unit 30 for monitoring vibration of the floating body 20.

In one embodiment, the floating-body type wind turbine power generating apparatus 1 includes a rotation speed meter 51 for measuring the rotation speed of the rotor 13 inside the nacelle, and a pitch-angle adjustment mechanism 53 for adjusting pitch angles of the blades 15 inside the hub.

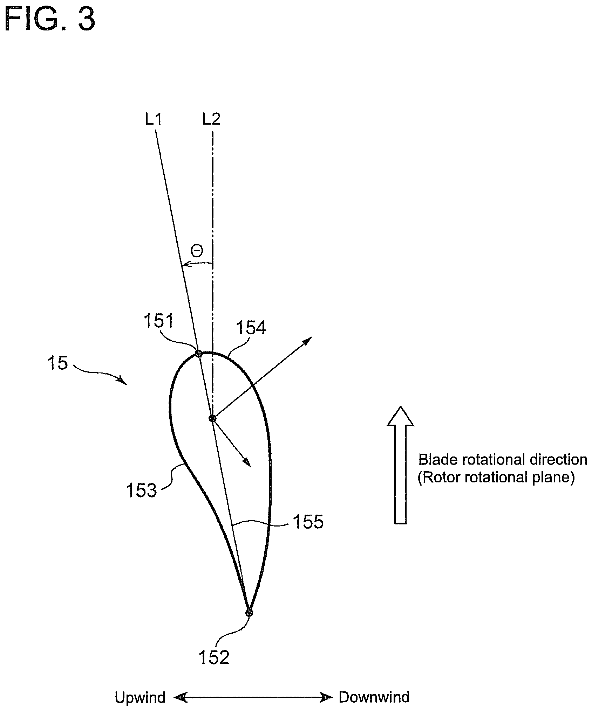

Here, the pitch angle of each blade 15 will be described in FIG. 3, which is a cross sectional view of a blade of a floating-body type wind turbine power generating apparatus according to one embodiment. As illustrated in the drawing, each blade 15 has an airfoil in which a pressure surface 153 and a suction surface 154 extend from a leading edge 151 to a trailing edge 152. Here, the straight line 155 connecting the leading edge 151 and the trailing edge 152 is referred to as a chord.

A pitch angle of the blade is an angle between an extension line $L_1$ of the chord 155 and a straight line $L_2$ parallel to the blade rotational direction (the rotor rotational plane). In FIG. 3, the pitch angle is the angle $\theta$. Each blade 15 typically has a pitch angle of approximately 0 degree while the wind turbine generator 10 is in normal operation, and the pitch angle here is referred to as a fine position. In contrast, each blade 2 typically has a pitch angle of approximately 90 degrees (the maximum angle) while the wind turbine generator 10 is completely stopped, and the pitch angle here is referred to as a feather position. When the pitch angle of each blade 15 is increased from the fine position (approx. 0 degree) toward the feather position (approx. 90 degrees), an aerodynamic braking force acts on the rotor 13, and the rotation speed of the rotor 13 decreases. Conversely, when the pitch angle of each blade 15 is reduced from the feather position (approx. 90 degrees) toward the fine position (approx. 0 degree), the lift force applied to each blade 15 increases, and the rotor rotation speed of the rotor 13 rises.

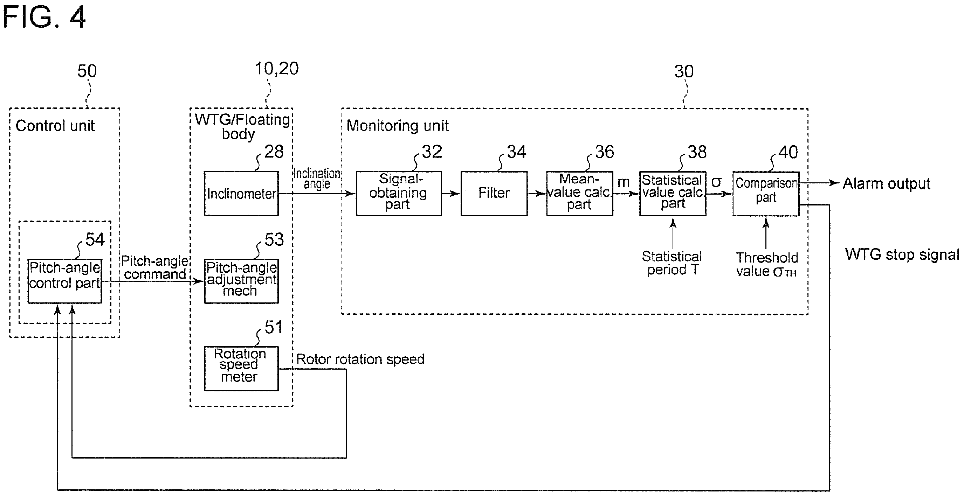

The control unit 50 is capable of executing a control mode in which the pitch angles of the blades 15 are controlled so as to maintain the rotation speed of the rotor 13 at a rated rotation speed. This control mode is also referred to as "pitch-angle control mode" hereinafter. In one embodiment, the pitch angle of each blade 15 which is be achieved by the control is calculated by a pitch-angle control part 54 on the basis of the rotation speed of the rotor 13 measured by the rotation speed meter 51 or the like (see FIG. 4). The pitch-angle adjustment mechanism 53 adjusts the pitch angles of the blades 15 on the basis of the calculated pitch command angle.

If the floating-body type wind turbine power generating apparatus 1 sways while the pitch angle control mode is executed by the control unit 50, sway of the floating-body type wind turbine power generating apparatus 1 may be promoted in accordance with the control of the pitch angles. Further, due to such promotion of the sway, self-excited vibration having a natural period of the sway of the floating body may be generated on the floating body 20.

The monitoring unit 30 is provided to monitor vibration of the above floating body 20. The monitoring unit 30 is configured to detect abnormal vibration due to execution of the pitch-angle control mode by the control unit 50, on the basis of the statistic value in a period of not less than the floating-body sway natural period of the floating body 20. The statistical value is obtained using the fluctuation amount of a value obtained from a signal representing at least one of the inclination angle or the inclination-angular velocity of the floating body 20.

The statistical value based on the inclination angle or the inclination-angular velocity of the floating body 20 upon floating-body sway caused by the pitch control represents a fluctuation component of the inclination angle or the inclination-angular velocity of the floating body 20 generated upon floating-body sway due to the pitch control. Thus, it is possible to detect abnormal vibration of the floating body caused by the pitch control by using the statistical value representing a fluctuation component of the inclination angle or the inclination-angular velocity of the floating body 20 which affects the stress amplitude generated in the wind turbine generator.

In one embodiment, the floating-body type wind turbine power generating apparatus 1 includes an inclinometer 28 as a sensor for measuring a physical amount which represents at least one of the inclination angle or the inclination-angular velocity of the floating body 20. In one embodiment, the inclinometer 28 is a gyroscope. In one embodiment, as illustrated in FIG. 2, the inclinometer 28 is disposed on the floating body 20. In another embodiment, the inclinometer 28 may be disposed on a base part of the tower 11. In yet another embodiment, the floating-body wind turbine power generating apparatus 1 may include an acceleration sensor 52 as a sensor for measuring a physical amount which represents at least one of the inclination angle or the inclination-angular velocity of the floating body 20. The acceleration sensor 52 may be disposed on the nacelle 12 of the wind turbine generator 10 as illustrated in FIG. 2.

In one embodiment, the sensor including the inclinometer 28 is configured to measure a physical amount representing at least one of the inclination angle or the inclination-angular velocity of the floating body 20 at a predetermined sampling period S (for instance, 20Hz).

In one embodiment, the monitoring unit 30 is configured to detect abnormal vibration due to execution of the pitch angle control mode by the control unit 50, on the basis of the statistical value based on a difference between the value obtained from the signal representing at least one of the inclination angle or the inclination-angular velocity of the floating body 20 and the mean value of the value in a period of not less than the floating-body sway natural period of the floating body.

Here, with reference to FIG. 4, the configuration of the monitoring unit 30 according to one embodiment will be described. Fig .4 is a block diagram of a configuration of a wind turbine generator, a floating body, a control unit and a monitoring unit according to one embodiment. As illustrated in FIG. 4, the monitoring unit 30 according to one embodiment includes a signal-obtaining part 32, a mean-value calculation part 36, a statistical-value calculation part 38, and a comparison part 40. Further, in one embodiment, the monitoring unit 30 may include a filter (the second filter) 34. Here, in the embodiment illustrated in FIG. 4, as a sensor for measuring a physical amount representing at least one of the inclination angle or the inclination-angular velocity of the floating body 20, the inclinometer 28 for measuring a physical amount representing the inclination angle of the floating body 20 is employed.

Hereinafter, described is an embodiment in which abnormal vibration of the floating body 20 is detected using the fluctuation amount of a value obtained from a signal representing the inclination angle of the floating body 20. However, similar description applies to a case where abnormal vibration of the floating body 20 is detected using a fluctuation amount of a value obtained from a signal representing the inclination-angular velocity of the floating body 20.

The signal-obtaining part 32 is configured to obtain a signal representing the inclination angle of the floating body 20, on the basis of a detection signal which represents a physical amount representing the inclination angle of the floating body 20 from the inclinometer 28. The signal-obtaining part 32 is configured to obtain a signal representing the inclination angle of the floating body 20 on the basis of the above detection signal.

The mean-value calculation part 36 calculates a mean value "m" over a predetermined statistical period T[s] from the following equation (B) for a value xi obtained from a signal representing the inclination angle of the floating body 20 obtained by the signal-obtaining part 32.

$$m = \frac{1}{N} \sum_{i=1}^{N} x_i \qquad \cdots (\mathrm{B})$$

In the above equation (B), $x_i$ is a value representing the inclination angle of the floating body 20, N is the number of data $x_i$ in the statistical period T[s]. Given that the sampling period of the signal representing the inclination angle of the floating body 20 obtained by the inclinometer 28 is S[Hz], N = T × S.

The statistical value calculation part 38 calculates the fluctuation amount $xa_i$ of the inclination angle $x_i$ of the floating body 20 from the following equation (C) using the mean value m calculated by the mean-value calculation part 36, and further calculates a statistical value σ over the statistical period T from the following equation (A).

$$xa_i = x_i - m \qquad \cdots (\mathrm{C})$$

$$\sigma = \frac{1}{N} \left\{ \sum_{i=1}^{N} |xa_i|^n \right\}^{\frac{1}{n}} \qquad \cdots (\mathrm{A})$$

In the above equation (A), n is an optional number.

The statistical value σ represents dispersion of the inclination angle of the floating body 20 over the statistical period T. The magnitude of dispersion of the inclination angle of the floating body 20 corresponds to the magnitude of dispersion of a load applied to the wind turbine generator 10 due to the inclination angle or the like of the floating body 20, and of stress generated in accordance with the load. Specifically, the greater the dispersion of the inclination angle of the floating body 20 is, the greater the stress amplitude of the stress generated in the wind turbine generator 10 is. Thus, it is possible to detect abnormal vibration of the floating body 20 caused by the pitch control of the floating-body type wind turbine power generating apparatus 1 appropriately, using the statistical value σ representing dispersion of the inclination angle of the floating body 20.

In the above equation (A), the term $|x_i-m|$ represents the amplitude of the floating-body sway. Thus, it may be rephrased that the statistical value $\sigma$ calculated form the above equation (A) represents dispersion of the amplitude of the floating-body sway of the floating body 20 over the statistical period T.

In one embodiment, in the above equation (A), n = 2. In this case, the statistical value $\sigma$ represents a standard deviation of the inclination angle of the floating body 20.

In one embodiment, n in the above equation (A) may be a number which is a product of an inverse of the slope of an S-N curve at a location receiving a fatigue load and minus 1. For instance, in a case where a fatigue load applied to the tower base part is considered, if the slope of the S-N curve of the steel material of the tower is minus 1/4, n may be 4.

In the above statistical value calculation part 38, the statistical value $\sigma$ over the statistical period T is calculated using the mean value m over the statistical period T calculated by the mean value calculation part 36.

In one embodiment, the statistical period T is a period of not less than the floating-body sway natural period of the floating body 20. If the statistical period T is at least as long as the floating-body sway natural period of the floating body 20, it is possible to calculate an appropriate mean value m for calculating the statistical value $\sigma$, using the data of the inclination angle obtained during a single period of the floating-body sway natural period.

Here, the floating-body sway natural period may be 20 to 30 seconds, depending on the floating body or the type of the floating body.

However, if the statistical period T for calculating the statistical value $\sigma$ related to the inclination angle of the floating body 20 is too short, the number of samples in the statistical period T would be so few that the statistical value $\sigma$ to be calculated is affected and that appropriate evaluation is not possible. For instance, in a case where "$\sigma$" represented by the above equation (A) is used as the statistical value $\sigma$, the smaller number of the samples may result in a larger value, which makes it necessary to increase the threshold value.

In view of this, in one embodiment, the statistical period T may be not less than five times as long as the floating-body sway natural period, or not less than 150 seconds. In this way, it is possible to secure an adequate number of samples for calculating the statistical value $\sigma$ over the statistical period T, and to detect abnormal vibration of the floating body 20 due to the pitch control more appropriately. Further, since the statistical period T is adequately long, it is possible to avoid detection of a sudden external-force response such as a wave response, which makes it possible to monitor continuous unstable vibration which causes an increase in a fatigue load applied to the wind turbine generator 10 appropriately.

On the other hand, if the statistical period T for calculating the statistical value $\sigma$ related to the inclination angle of the floating body 20 is too long, when the wind condition radically changes in the statistical period T, appropriate evaluation may be impossible due to the calculated statistical value $\sigma$ being affected by the radical change in the wind condition. For instance, assuming that there is a period during which the wind velocity or the wave height is low and the inclination angle of the floating body 20 is substantially zero in a statistical period T, values would be averaged over the entire period to calculate the mean value of the inclination angle, including the period with the inclination angle being zero. Thus, even if there is a time when the wind velocity or the wave height has rapidly increased in the other periods, it may be difficult to determine the influence of the rapid increase.

In view of this, the statistical period T may be not more than 10,800 seconds or not more than 3,600 seconds in one embodiment. In this case, it is possible to detect abnormal vibration of the floating body 20 caused by the pitch control more appropriately, taking account of a change in the wind condition in the statistical period T.

In another embodiment, the monitoring unit 30 may calculate the statistical value $\sigma$ on the basis of the fluctuation amount obtained by a method different from the above. For instance, the monitoring unit 30 may include the first filter (not illustrated) for eliminating or reducing a component of a period longer than the floating-body sway natural period of the floating body 20 from a signal representing the inclination angle of the floating body 20 instead of the above mean-value calculation part 36, and may be configured to calculate a statistical value over the statistical period T using the fluctuation amount based on the value obtained from the signal processed by the first filter and detect abnormal vibration of the floating body 20 on the basis of this statistical value.

Using the first filter makes it possible to eliminate, from the signal representing the inclination angle of the floating body 20 obtained by the inclinometer 28, a drift component of the signal or a low-frequency response component such as a natural frequency due to the mooring device 26 (mooring cables) and the floating body 20. Further, using the first filter makes it possible to eliminate, from the signal representing the inclination angle of the floating body 20, a component which has a frequency of zero and does not change with time. In this way, it is possible to obtain a waveform which has the floating-body sway natural period of the floating body 20 and has a mean of substantially zero, so that the value representing the amplitude of the floating-body sway can be directly obtained from the signal representing the inclination angle of the floating body 20. Then, from the fluctuation amount of the value representing the amplitude over the statistical period T, it is possible to detect abnormal vibration of the floating body 20.

As the first filter, a filter capable of reducing or eliminating a component of a period longer than the natural frequency (for instance, 0.03 to 0.05Hz) of sway of the floating body 20, which is a component with a small frequency, can be used. In one embodiment, a high-pass filter having a cutoff frequency of 0.02Hz is used, for instance.

As described above, in a case where the first filter is used instead of the mean-value calculation part 36, it is possible to calculate the statistical value $\sigma$ over the statistical period T by the above equation (A) from the value xa; representing the fluctuation amount of the inclination angle, which is the value representing the amplitude of the floating-body sway, obtained from the signal processed by the first filter. Thus, it is possible to detect abnormal vibration of the floating body 20 caused by the pitch control of the floating-body type wind turbine power generating apparatus 1 appropriately, using the statistical value $\sigma$ representing dispersion of the inclination angle of the floating body 20.

The comparison part 40 compares the statistical value $\sigma$ calculated by the statistical value calculation part 38 with the threshold value $\sigma_{TH}$ having been set in advance. If the calculated statistical value $\sigma$ is greater than the threshold value $\sigma_{TH}$ as a result of the comparison, it is determined that abnormal vibration has occurred to the floating body 20.

In one embodiment, the monitoring unit 30 outputs an alarm when abnormal vibration of the floating body 20 is detected in the comparison part 40. Outputting an alarm upon detection of abnormal vibration of the floating body 20 makes it possible to take a measure after detection of abnormal vibration, such as procedures for stopping the wind turbine generator 10 performed by workers who recognized detection of the abnormal vibration from the alarm.

Further, in one embodiment, the monitoring unit 30 transmits a signal for stopping the wind turbine generator 10 to the control unit 50 when abnormal vibration of the floating body 20 is detected by the comparison part 40. Transmitting a signal for stopping the wind turbine generator 10 to the control unit 50 when abnormal vibration of the floating body 20 is detected by the comparison part 40 makes it possible to stop the wind turbine generator 10 immediately by the control unit 50.

In one embodiment, the threshold value $\sigma_{TH}$ to be compared with the calculated statistical value $\sigma$ is set to be within a range of not less than 0.5 degree and not more than 5 degrees.

According to the studies of the present inventors, it was found that an influence on the floating-body sway of the self-exciting vibration of the floating body caused by the pitch angle control of the blade varies depending on the type of the floating body 20.

For instance, in a case where the floating body is of a semi-submersible type as illustrated in FIG. 1, the influence of self-exciting vibration on the floating-body sway is relatively small. For instance, the influence is smaller than that of the ocean waves. Thus, it is possible to detect abnormal vibration with high accuracy by setting the threshold value at a relatively small value. The threshold value $\sigma_{TH}$ for a semi-submersible type floating-body may be in a range of from 0.5 degree to 3 degrees.

Further, in a case where the floating body is of a spar type having a cylindrical shape, the influence of self-exciting vibration on the floating-body sway is relatively large, and the floating body has a structure in which tilting is likely to appear due to self-exciting vibration. Thus, it is possible to detect abnormal vibration with high accuracy by setting the threshold value at a relatively large value. The threshold value $\sigma_{TH}$ of a spar type floating-body may be in a range of from 3 to 5 degrees.

In one embodiment, the monitoring unit 30 may be configured such that the threshold value $\sigma_{TH}$, which is to be compared with the statistical value $\sigma$ calculated by the statistical value calculation part 38, is variable in accordance with the mean value of the pitch angle the wind velocity of wind received by the rotor 13 in the statistical period T.

There is a certain correlation between the magnitude of the floating-body sway due to the pitch control and the wind velocity of wind received by the rotor 13. Further, the pitch angle of the blade 15 controlled by the pitch angle control part 54 may depend on the wind velocity received by the rotor 13. Thus, it is possible to improve the accuracy in detecting abnormal vibration of the floating body 2 by setting a threshold value which is variable in accordance with a mean value of the wind velocity of wind received by the rotor 13 or the pitch angle of the blade 15.

The wind velocity received by the above rotor 13 may be an actual measurement value measured by an anemometer (not illustrated) disposed on the wind turbine generator 10, or an estimate value estimated on the basis of the pitch angle of the blade, the rotation speed of the rotor 13, the torque of the rotor 13, or the like. Further, the above pitch angle may be an actual measurement value or a pitch command angle calculated by the pitch angle control part 54 while the pitch angle control mode is executed.

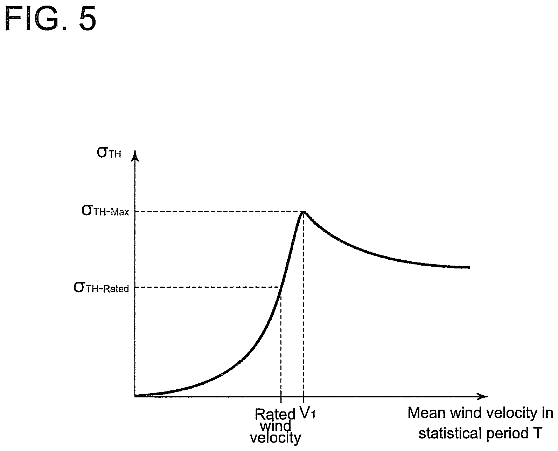

FIG. 5 is a diagram of a change in the threshold value of the statistical value with respect to the mean value of wind velocity according to one embodiment.

In one embodiment, the threshold value $\sigma_{TH}$ to be compared with the statistical value $\sigma$ calculated by the statistical value calculation part 38 is set so as to reach the maximum at a wind velocity $V_1$ not less than the rated wind velocity, and to decrease with an increase in the wind velocity, in a region in which the mean value of the wind velocity received by the rotor 13 is not less than the rate wind velocity of the wind turbine generator 10.

The floating-body sway due to the pitch control occurs when the pitch angle control mode is executed, i.e., when the wind velocity is the rated wind velocity or higher. Further, there is a tendency that the floating-body sway due to the pitch control is the most likely to occur at the rated wind velocity, and is less likely to occur as the wind velocity increases in a high wind-velocity region where the wind velocity is the rated wind velocity or higher. Thus, the higher the wind velocity is, the more it is desirable to detect abnormal sway of the floating body with high sensitivity.

In view of this, as illustrated in FIG. 5 for instance, the threshold value $\sigma_{TH}$ in a region where the mean value of the wind velocity of wind received by the rotor 13 is not less than the rated wind velocity is set so as to reach the maximum ($\sigma_{TH\_Max}$) at a wind velocity V1 which is not less than the rated wind velocity, and to decrease with an increase in the wind velocity, which makes it possible to detect abnormal vibration with sensitivity that increases with the mean value of the wind velocity of wind received by the rotor 13. Thus, it is possible to improve accuracy in detection of abnormal vibration of the floating body 20.

In one embodiment, the threshold value is set so as to reach the maximum when the mean value of the wind velocity of wind received by the rotor 13 is the rated wind velocity.

In one embodiment, the threshold value is set so as to reach the maximum in a range where the mean value of the wind velocity of wind received by the rotor 13 is not less than (rated wind velocity + 1) m/s, and not more than (rated wind velocity + 3) m/s. In a wind velocity region where the wind velocity is less than the rated wind velocity and the pitch angle control mode is not executed, the floating-body sway due to the pitch control does not occur. Thus, the $\sigma_{TH}$ in a case where the mean of the wind velocity over the statistical period T is a little greater than the rated wind velocity (for instance, 1 to 3 m/s) is set at the maximum $\sigma_{TH\_Max}$, and the $\sigma_{TH}$ in a case where the mean of the wind velocity is the rated wind velocity is set at a value smaller than $\sigma_{TH\_Max}$ (for instance, $\sigma_{TH\_Rated}$ in FIG. 5) taking account of a case where the wind velocity is less than the rated wind velocity, which makes it possible to detect abnormal vibration of the floating body 20 more appropriately.

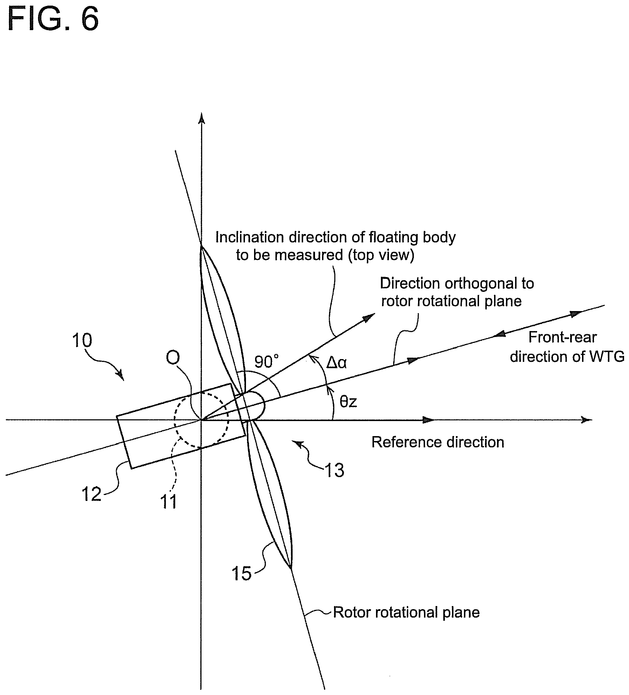

FIG. 6 is a diagram for describing the front-rear direction and the yaw angle of the wind turbine generator.

In one embodiment, the monitoring unit 30 is configured to detect abnormal vibration due to execution of the pitch angle control mode by the control unit 50, on the basis of a statistical value based on a difference between a value obtained from a signal representing the inclination angle or the inclination-angular velocity of the floating body 20 in the front-rear direction of the wind turbine generator 10 and a mean value of the value over a period of not less than the floating-body sway natural period of the floating body 20.

While a floating-body type wind turbine generator may sway in various directions, the pitch control mainly promotes the sway in the front-rear direction (a direction orthogonal to the rotational plane of the rotor 13 of the wind turbine generator 10; see FIG. 6) of the wind turbine generator 10. In view of this, evaluation is performed on the basis of the inclination angle or the inclination-angular velocity of the floating body 20 in the front-rear direction of the wind turbine generator 10, which makes it possible to detect abnormal vibration of the floating body 20 due to the pitch control more precisely.

In one embodiment, the monitoring unit 30 may be configured to detect the above abnormal vibration on the basis of a statistical value based on a difference between: a value obtained from the signal representing the inclination angle or the inclination-angular velocity of the floating body 20 at an angle offset by several degrees with respect to the vertical axis O of the tower 11 from the front-rear direction of the wind turbine generator 10 (for instance, an angle in a range of from minus 30 to plus 30 degrees); and a mean value of the value over a period of not less than the floating-body sway natural period of the floating body 20.

In one embodiment, the monitoring unit 30 may be configured to detect abnormal vibration due to execution of the pitch angle control mode by the control unit 50, on the basis of a statistical value based on a difference between: a value obtained from a signal representing the inclination angle or the inclination-angular velocity of the floating body 20 in the front-rear direction and a direction orthogonal to the front-rear direction of the wind turbine generator 10 (for instance, a composition of a signal representing the inclination angle or the like in the front-rear direction of the wind turbine generator 10 and a signal representing the inclination angle or the like in the orthogonal direction of the wind turbine generator 10); and a mean value of the value in a period of not less than the floating-body sway natural period of the floating body 20.

In the embodiment in which the inclinometer 28 is disposed on the floating body 20 or the tower 11, the signal-obtaining part 32 may be configured to calculate an angular difference $\Delta\alpha$ in a top view between the front-rear direction of the wind turbine generator 10 and a tilting direction in which the inclinometer 28 performs measurement based on a yaw angle $\theta_z$ of the wind turbine generator 10 and obtain the signal in the front-rear direction of the wind turbine generator 10 from the detection signal of the inclinometer 28 on the basis of the angular difference $\Delta\alpha$.

In the present specification, the yaw angle refers to an angle $\theta z$ between a direction orthogonal to the rotational plane of the rotor 13 (which is the front-rear direction of the wind turbine generator 10) and a reference direction which is a direction into which a predetermined position of the tower 11 is oriented with respect to the perpendicular axis O of the tower 11 being the center.

In one embodiment, the signal obtaining part 32 is configured to obtain a detection signal by the inclinometer 28 of the time when the above angular difference $\Delta\alpha$ is zero, as a signal in the front-rear direction of the wind turbine generator 10.

In the embodiment in which the acceleration meter 52 disposed on the nacelle 12 is used as a sensor for measuring a physical amount representing at least one of the inclination angle or the inclination-angular velocity of the floating body 20, the acceleration meter 52 may be configured to obtain an acceleration of the nacelle 12 in the front-rear direction of the wind turbine generator 10.

Further, the signal obtaining part 32 may be configured to convert a signal representing an acceleration of the nacelle 12 obtained by the acceleration meter 52 into a signal representing the inclination angle of the floating body 20 by processing the signal representing the acceleration. More specifically, for instance, a moving velocity v of the nacelle 12 in the front-rear direction of the wind turbine generator 10 is calculated by integrating an acceleration of the nacelle 12 in the front-rear direction of the wind turbine generator 10 obtained by the acceleration meter 52. When the length to the nacelle 12 from the gravity center of the floating-body type wind turbine power generating apparatus 1 being the rotational center of the floating body 20 is h, the angular velocity ω of the nacelle 12 is v/h. More specifically, the length here is the length to the acceleration meter 52 from the gravity center of the floating-type wind turbine power generating apparatus 1. Thus, by integrating ω, it is possible to calculate the inclination angle of the nacelle 12 in the front-rear direction of the wind turbine generator 10, i.e., the inclination angle of the floating body 20 in the front-rear direction of the wind turbine generator 10.

In one embodiment, the monitoring unit 30 may further include the second filter 34 for eliminating or reducing at least a frequency component of waves which acts on the floating body 20 from the signal representing the inclination angle of the floating body 20. In this case, for instance, the monitoring unit 30 may be configured to detect abnormal vibration of the floating body 20 by calculating the above mean value m and the statistical value σ by the mean value calculation part 36 and the statistical value calculation part 38 on the basis of the statistical value based on the signal processed by the second filter 34.

In this case, evaluation is performed on the basis of the signal obtained by eliminating or reducing a frequency component of waves from the signal representing the inclination angle. The frequency component of waves is a great obstacle in evaluation of the floating-body sway. Thus, it is possible to detect abnormal vibration of the floating body due to the pitch control more precisely.

Normally, a frequency of waves is higher (e.g. 0.05 to 0.2Hz) than the natural frequency of sway of the floating body 20 (e.g. 0.03 to 0.05Hz). Thus, for instance, a low-pass filter having a cutoff frequency of 0.1Hz may be used as the second filter 34 to reduce or eliminate frequency components of 0.1 Hz and more.

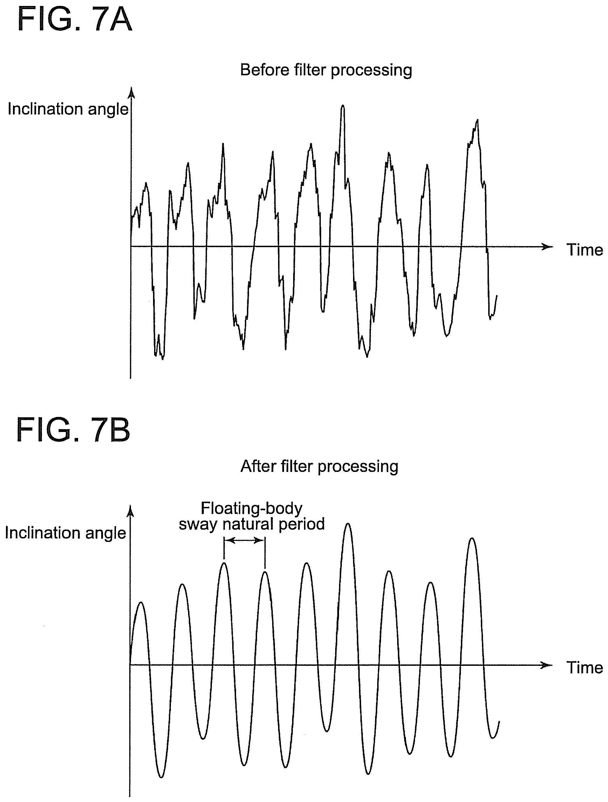

FIG. 7A is an example of a waveform of a signal representing the inclination angle, and FIG. 7B is a diagram of a waveform according to one embodiment after the waveform of FIG. 7A has been processed by the second filter (the above low-pass filter). As illustrated in the drawings, processing the signal representing the inclination angle of the floating body 20 by the second filter makes it possible to eliminate noise having a component of a period shorter than the floating-body sway natural period such as a wave period.

Further, the second filter 34 may be configured to reduce or eliminate a component of natural frequency related to a structure (e.g. tower 11) other than the floating body 20, included in the floating-body type wind turbine power generating apparatus 1.

In one embodiment, the monitoring unit 30 detects abnormal vibration of the floating body 20 on the basis of the statistical value σ only when the wind velocity of wind received by the rotor 13 is not less than the rated wind velocity or only when the pitch control mode is executed by the control unit 50.

Since the statistical value σ is calculated and compared to the threshold value $\sigma_{TH}$ only when the wind velocity is not less than the rated wind velocity or only when the pitch control mode is executed, it is possible to reduce a calculation load of the monitoring unit 30.

Whether the pitch angle control mode is being executed by the control unit 50 may be determined by determining whether the pitch command value calculated by the pitch angle control part 54 is not less than a threshold value, or by determining whether the mean value of the pitch angles of a plurality of blades 15 is not less than a threshold value.

In one embodiment, the monitoring unit 30 may be configured to detect abnormal vibration of the floating body 20 on the basis of the statistical value σ only when the mean value of the wind velocity of wind received by the rotor 13 over the statistical period T is not less than the rated wind velocity.

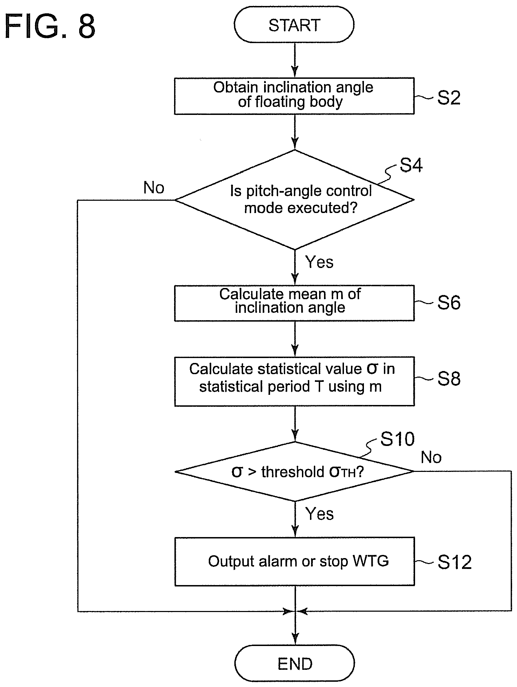

FIG. 8 is a flowchart of a method of operating a floating-body type wind turbine power generating apparatus according to one embodiment. The floating-body type wind turbine power generating apparatus 1 according to the above described embodiment can be operated according to the operation method illustrated in FIG. 8.

First, a signal representing the inclination angle of the floating body 20 is obtained (S2).

Next, it is determined whether the pitch angle control mode is being executed (S4). In the pitch angle control mode, the pitch angle of the blade 15 is controlled so as to maintain the rotation speed of the rotor 13 at the rated rotation speed.

If it is determined that the pitch angle control mode is being executed in S4 (Yes in S4), the mean value m over a period of not less than the floating-body sway natural period of the floating body 20, which is the statistical period T, is calculated for the inclination angle obtained in S2 (S6). The mean value m can be calculated by the above equation (B), for instance.

Next, a statistical value σ is calculated using a difference between the inclination angle of the floating body 20 obtained from the signal obtained in S2 and the mean value m of the inclination angle of the floating body 20 over the statistical period T obtained in S6 (S8). The statistical value σ can be calculated from, for instance, the above equation (A).

Subsequently, the statistical value σ calculated in S8 is compared to a threshold value $\sigma_{TH}$ having been set in advance (S10).

If the calculated statistical value σ is greater than the threshold value $\sigma_{TH}$ in S10, it is determined that there has been abnormal vibration due to execution of the pitch angle control mode, and an alarm is outputted or the wind turbine generator 10 is stopped (S12).

Embodiments of the present invention were described in detail above, but the present invention is not limited thereto, and various amendments and modifications may be implemented within a scope that does not depart from the present invention.

In the present specification, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

Further, in the present specification, an expression such as "comprise", "include", "have", "contain" and "constitute" are not intended to be exclusive of other components.

**Claims**

1. A floating-body type wind turbine power generating apparatus (1) comprising:

    a floating body (20);
    a wind turbine generator (10) erected on the floating body (20), the wind turbine generator (10) including a rotor (13) having a hub (14) and a blade (15) mounted to the hub (14);
    a control unit (50) capable of executing a control mode in which a pitch angle of the blade (15) is controlled so that a rotation speed of the rotor (13) is maintained at a rated rotation speed; and
    a monitoring unit (30) for monitoring vibration of the floating body (20),
    **characterized in that** the monitoring unit (30) is configured to detect abnormal vibration due to execution of the control mode by the control unit (50), on the basis of a statistical value over a period of not less than a floating-body sway natural period of the floating body (20), the statistical value being based on a fluctuation amount of a value obtained from a signal representing at least one of an inclination angle and an inclination-angular velocity of the floating body (20), the statistical value representing a fluctuation component of the inclination angle or the inclination-angular velocity of the floating body (20) generated upon floating-body sway due to the execution of the control mode,
    wherein the floating-body sway natural period is a period of a self-excited vibration of the floating body generated due to the execution of the control mode.

2. The floating-body type wind turbine power generating apparatus (1) according to claim 1,
    wherein the fluctuation amount is obtained from a difference between the value and a mean of the value over the period.

3. The floating-body type wind turbine power generating apparatus (1) according to claim 1,
    wherein the monitoring unit (30) includes a first filter for eliminating or reducing a component of a period longer than the floating-body sway natural period of the floating-body (20) from the signal, and
    wherein the fluctuation amount is obtained by processing the value with the first filter.

4. The floating-body type wind turbine power generating apparatus (1) according to any one of claims 1 to 3,
    wherein the monitoring unit (30) is configured to detect the abnormal vibration due to execution of the control mode by the control unit (50), on the basis of a statistical value over a period of not less than a floating-body sway natural period of the floating body (20), the statistical value being based on a fluctuation amount of a value obtained from a signal representing at least one of the inclination angle or the inclination-angular velocity of the floating body (20) in a front-rear direction of the wind turbine generator (10).

5. The floating-body type wind turbine power generating apparatus (1) according to any one of claims 1 to 4, wherein the statistical value is "σ" represented by the following equation (A):

$$\sigma = \frac{1}{N}\left\{\sum_{i=1}^{N}|xa_i|^n\right\}^{\frac{1}{n}} \qquad \cdot \cdot \cdot (\text{A})$$

, where xa; is the fluctuation amount of the value representing the inclination angle or the inclination-angular velocity of the floating body (20), and N is the number of data of $xa_i$ in the period.

6. The floating-body type wind turbine power generating apparatus (1) according to any one of claims 1 to 5, wherein the length of the period is not less than 150 seconds and not more than 3,600 seconds.

7. The floating-body type wind turbine power generating apparatus (1) according to any one of claims 1 to 6, wherein the monitoring unit (30) is configured to determine that the abnormal vibration has occurred if the statistical value σ over the period is greater than a threshold value $\sigma_{TH}$ variable in accordance with a mean value of the pitch angle or a wind velocity of wind received by the rotor (13) over the period.

8. The floating-body type wind turbine power generating apparatus (1) according to claim 5 or 6, wherein the monitoring unit (30) is configured to determine that the abnormal vibration has occurred if the statistical value σ is greater than a threshold value, the statistical value being based on a difference between the value in the period and a value representing the inclination angle of the floating body (20), and wherein the threshold value is set to be within a range of not less than 0.5 degree and not more than 5 degrees, wherein the monitoring unit (30) is configured such that the threshold value is variable in accordance with a mean value of the pitch angle or a wind velocity of wind received by the rotor (13) over the period.

9. The floating-body type wind turbine power generating apparatus (1) according to claim 8, wherein, in a region where the mean value of the wind velocity is not less than a rated wind velocity of the wind turbine generator (10), the threshold value is set to be the maximum at a wind velocity $V_1$ which is not less than the rated wind velocity and to decrease with an increase in the wind velocity.

10. The floating-body type wind turbine power generating apparatus (1) according to any one of claims 1 to 9, wherein the monitoring unit (30) includes a second filter (34) for eliminating or reducing at least a frequency component of a wave acting on the floating body (20) from the signal, and is configured to detect the abnormal vibration on the basis of a statistical value based on the fluctuation amount based on a value obtained from the signal processed by the second filter (34).

11. The floating-body type wind turbine power generating apparatus (1) according to any one of claims 1 to 10, further comprising:

a sensor (28, 52) for measuring a physical amount representing at least one of the inclination angle or the inclination-angular velocity of the floating body (20); and
a signal-obtaining part (32) for obtaining the signal representing at least one of the inclination angle or the inclination-angular velocity of the floating body (20), on the basis of a detection signal from the sensor (28, 52).

12. The floating-body type wind turbine power generating apparatus (1) according to claim 11, wherein the signal-obtaining part (32) is configured to calculate, on the basis of a yaw angle of the wind turbine generator (10), an angular difference in a planar view between the front-rear direction of the wind turbine generator (10) and an inclination direction in which the sensor (28, 52) performs measurement, and to obtain the signal in the front-rear direction of the wind turbine generator (10) from the detection signal from the sensor (28, 52) on the basis of the angular difference.

13. The floating-body type wind turbine power generating apparatus (1) according to any one of claims 1 to 12, wherein the monitoring unit (30) is configured to detect the abnormal vibration on the basis of the statistical value only when the wind velocity of the wind received by the rotor (13) is not less than the rated wind velocity or when the control mode is executed by the control unit (50).

14. The floating-body type wind turbine power generating apparatus (1) according to any one of claims 1 to 13, wherein the monitoring unit (30) is configured to output an alarm or to transmit a signal for stopping the wind turbine generator (10) to the control unit when the abnormal vibration is detected.

15. A method of operating a floating-body type wind turbine power generating apparatus (1) which includes a floating body (20) and a wind turbine generator (10) erected on the floating body (20), the wind turbine generator (10) including a rotor (13) having a hub (14) and a blade (15) mounted to the hub (14), the method comprising:

a pitch-control step (S4) of executing a control mode of controlling a pitch angle of the blade (15) so as to maintain a rotation speed of the rotor (13) at a rated rotation speed;
a signal-obtaining step (S2) of obtaining a signal which represents at least one of an inclination angle and an inclination velocity of the floating body (20); and
**characterized in that** it comprises an abnormal-vibration detection step (S10) of detecting abnormal vibration due to execution of the control mode in the pitch-control step (S4), on the basis of a statistical value over a period of not less than a floating-body sway natural period of the floating body (20), the statistical value being based on a fluctuation amount of a value obtained from the signal obtained in the signal-obtaining step (S2), the statistical value representing a fluctuation component of the inclination angle or the inclination-angular velocity of the floating body (20) generated upon floating-body sway due to the execution of the control mode, wherein the floating-body sway natural period is a period of a self-excited vibration of the floating body generated due to the execution of the control mode.

**Patentansprüche**

1. Schwebekörper-Windturbinenstromerzeugungsvorrichtung (1), umfassend:

einen Schwebekörper (20);
einen Windturbinengenerator (10), der auf dem Schwebekörper (20) errichtet ist, wobei der Windturbinengenerator (10) einen Rotor (13) umfasst, der eine Nabe (14) und ein Blatt (15) aufweist, das an der Nabe (14) montiert ist;
eine Steuereinheit (50), die in der Lage ist, einen Steuerungsmodus auszuführen, in dem ein Einstellwinkel des Blattes (15) derart gesteuert wird, dass eine Drehzahl des Rotors (13) bei einer Nenndrehzahl gehalten wird; und
eine Überwachungseinheit (30) zur Überwachung der Schwingung des Schwebekörpers (20),
**dadurch gekennzeichnet, dass** die Überwachungseinheit (30) ausgestaltet ist, um abnormale Schwingung aufgrund der Ausführung des Steuerungsmodus durch die Steuereinheit (50) basierend auf einem statistischen Wert über eine Periode von nicht weniger als einer natürlichen Schwebekörper-Schaukelperiode des Schwebekörpers (20) festzustellen, wobei der statistische Wert auf einem Schwankungsbetrag eines Wertes basiert, der von einem Signal erhalten wird, das mindestens eines von einem Neigungswinkel und einer Neigungswinkelgeschwindigkeit des Schwebekörpers (20) darstellt, wobei der statistische Wert eine Schwankungskomponente des Neigungswinkels oder der Neigungswinkelgeschwindigkeit des Schwebekörpers (20) darstellt, die beim Schaukeln des Schwebekörpers aufgrund der Ausführung des Steuerungsmodus erzeugt wird, wobei die natürliche Schwebekörper-Schaukelperiode eine Periode einer selbst angeregten Schwingung des Schwebekörpers ist, die aufgrund der Ausführung des Steuerungsmodus erzeugt wird.

2. Schwebekörper-Windturbinenstromerzeugungsvorrichtung (1) nach Anspruch 1, wobei der Schwankungsbetrag von einer Differenz zwischen dem Wert und einem Mittel des Wertes über die Periode erhalten wird.

3. Schwebekörper-Windturbinenstromerzeugungsvorrichtung (1) nach Anspruch 1, wobei die Überwachungseinheit (30) ein erstes Filter zur Beseitigung oder Verringerung einer Komponente einer Periode, die länger als die natürliche Schwebekörper-Schaukelperiode des Schwebekörpers (20) ist, von dem Signal umfasst, und wobei der Schwankungsbetrag durch Verarbeitung des Wertes mit dem ersten Filter erhalten wird.

4. Schwebekörper-Windturbinenstromerzeugungsvorrichtung (1) nach einem der Ansprüche 1 bis 3, wobei die Überwachungseinheit (30) ausgestaltet ist, um die abnormale Schwingung aufgrund der Ausführung des Steuerungsmodus durch die Steuereinheit (50) basierend auf einem statistischen Wert über eine Periode von nicht weniger als einer natürlichen Schwebekörper-Schaukelperiode des Schwebekörpers (20) festzustellen, wobei der statistische Wert auf einem Schwankungsbetrag eines Wertes basiert, der von einem Signal erhalten wird, das mindestens eines von einem Neigungswinkel oder der Neigungswinkelgeschwindigkeit des Schwebekörpers (20) in einer Vorwärts-Rückwärts-Richtung des Windturbinengenerators (10) darstellt.

5. Schwebekörper-Windturbinenstromerzeugungsvorrichtung (1) nach einem der Ansprüche 1 bis 4, wobei der statistische Wert "σ" ist, der durch die folgende Gleichung (A) dargestellt wird:

$$\sigma = \frac{1}{N}\left\{\sum_{i=1}^{N} |xa_i|^n\right\}^{\frac{1}{n}} \qquad \dots (A)$$

wo $xa_i$ der Schwankungsbetrag des Wertes ist, der den Neigungswinkel oder die Neigungswinkelgeschwindigkeit des Schwebekörpers (20) darstellt, und N die Anzahl der Daten von $xa_i$ in der Periode ist.

6. Schwebekörper-Windturbinenstromerzeugungsvorrichtung (1) nach einem der Ansprüche 1 bis 5, wobei die Länge der Periode nicht weniger als 150 Sekunden und nicht mehr als 3 600 Sekunden ist.

7. Schwebekörper-Windturbinenstromerzeugungsvorrichtung (1) nach einem der Ansprüche 1 bis 6, wobei die Überwachungseinheit (30) ausgestaltet ist, um zu bestimmen, dass die abnormale Schwingung aufgetreten ist, wenn der statistische Wert σ über die Periode größer als ein Schwellenwert $\sigma_{TH}$ ist, der gemäß einem Mittelwert des Einstellwinkels oder einer Windgeschwindigkeit von durch den Rotor (13) über die Periode empfangenem Wind variabel ist.

8. Schwebekörper-Windturbinenstromerzeugungsvorrichtung (1) nach Anspruch 5 oder 6, wobei die Überwachungseinheit (30) ausgestaltet ist, um zu bestimmen, dass die abnormale Schwingung aufgetreten ist, wenn der statistische Wert σ größer als ein Schwellenwert ist, wobei der statistische Wert auf einer Differenz zwischen dem Wert in der Periode und einem Wert basiert, der den Neigungswinkel des Schwebekörpers (20) darstellt, und
wobei der Schwellenwert eingestellt ist, um innerhalb eines Bereichs von nicht weniger als 0,5 Grad und nicht mehr als 5 Grad zu liegen,
wobei die Überwachungseinheit (30) derart ausgestaltet ist, dass der Schwellenwert gemäß einem Mittelwert des Einstellwinkels oder einer Windgeschwindigkeit von durch den Rotor (13) über die Periode empfangenem Wind variabel ist.

9. Schwebekörper-Windturbinenstromerzeugungsvorrichtung (1) nach Anspruch 8, wobei in einer Region, wo der Mittelwert der Windgeschwindigkeit nicht weniger als eine Nennwindgeschwindigkeit des Windturbinengenerators (10) ist, der Schwellenwert eingestellt ist, um bei einer Windgeschwindigkeit $V_1$, die nicht weniger ist als die Nennwindgeschwindigkeit, das Maximum zu sein und mit einer Zunahme bei der Windgeschwindigkeit abzunehmen.

10. Schwebekörper-Windturbinenstromerzeugungsvorrichtung (1) nach einem der Ansprüche 1 bis 9, wobei die Überwachungseinheit (30) ein zweites Filter (34) zur Beseitigung oder Verringerung von mindestens einer Frequenzkomponente einer Welle, die auf den Schwebekörper (20) wirkt, von dem Signal umfasst und ausgestaltet ist, um die abnormale Schwingung basierend auf einem statistischen Wert festzustellen, der auf dem Schwankungsbetrag basierend auf einem Wert basiert, der von dem durch das zweite Filter (34) verarbeiteten Signal erhalten wird.

11. Schwebekörper-Windturbinenstromerzeugungsvorrichtung (1) nach einem der Ansprüche 1 bis 10, ferner umfassend:

einen Sensor (28, 52) zur Messung einer physikalischen Größe, die mindestens eines von dem Neigungswinkel oder der Neigungswinkelgeschwindigkeit des Schwebekörpers (20) darstellt; und
einen Signalerhalteteil (32) zum Erhalten des Signals, das mindestens eines von dem Neigungswinkel oder der Neigungswinkelgeschwindigkeit des Schwebekörpers (20) darstellt, basierend auf einem Detektionssignal von dem Sensor (28, 52).

12. Schwebekörper-Windturbinenstromerzeugungsvorrichtung (1) nach Anspruch 11, wobei der Signalerhalteteil (32) ausgestaltet ist, um basierend auf einem Gierwinkel des Windturbinengenerators (10) eine Winkeldifferenz in einer ebenen Ansicht zwischen der Vorwärts-Rückwärts-Richtung des Windturbinengenerators (10) und einer Neigungsrichtung, in der der Sensor (28, 52) die Messung durchführt, zu berechnen und das Signal in der Vorwärts-Rückwärts-Richtung des Windturbinengenerators (10) von dem Detektionssignal von dem Sensor (28, 52) basierend auf der Winkeldifferenz zu erhalten.

13. Schwebekörper-Windturbinenstromerzeugungsvorrichtung (1) nach einem der Ansprüche 1 bis 12, wobei die Überwachungseinheit (30) ausgestaltet ist, um die abnormale Schwingung basierend auf dem statistischen Wert nur festzustellen, wenn die Windgeschwindigkeit des durch den Rotor (13) empfangenen Windes nicht weniger ist als die Nennwindgeschwindigkeit oder wenn der Steuerungsmodus durch die Steuereinheit (50) ausgeführt wird.

14. Schwebekörper-Windturbinenstromerzeugungsvorrichtung (1) nach einem der Ansprüche 1 bis 13, wobei die Überwachungseinheit (30) ausgestaltet ist, um einen Alarm auszugeben oder um ein Signal zum Anhalten des Windturbinengenerators (10) an die Steuereinheit zu senden, wenn die abnormale Schwingung festgestellt wird.

15. Verfahren für den Betrieb einer Schwebekörper-Windturbinenstromerzeugungsvorrichtung (1), die einen Schwebekörper (20) und einen Windturbinengenerator (10) umfasst, der auf dem Schwebekörper (20) errichtet ist, wobei der Windturbinengenerator (10) einen Rotor (13) umfasst, der eine Nabe (14) und ein Blatt (15) aufweist, das an der Nabe (14) montiert ist, wobei das Verfahren Folgendes umfasst:

einen Einstellsteuerungsschritt (S4) zum Ausführen eines Steuerungsmodus zum Steuern eines Einstellwinkels des Blattes (15), um eine Drehzahl des Rotors (13) bei einer Nenndrehzahl zu halten; einen Signalerhalteschritt (S2) zum Erhalten eines Signals, das mindestens eines von einem Neigungswinkel und einer Neigungsgeschwindigkeit des Schwebekörpers (20) darstellt; und **dadurch gekennzeichnet, dass** es einen Schritt (S10) zur Feststellung von abnormaler Vibration zum Feststellen von abnormaler Vibration aufgrund der Ausführung des Steuerungsmodus in dem Einstellsteuerungsschritt (S4) basierend auf einem statistischen Wert über eine Periode umfasst, die nicht weniger ist als eine natürliche Schwebekörper-Schaukelperiode des Schwebekörpers (20), wobei der statistische Wert auf einem Schwankungsbetrag eines Werts basiert, der von dem in dem Signalerhalteschritt (S2) erhaltenen Signal erhalten wird, wobei der statistische Wert eine Schwankungskomponente des Neigungswinkels oder der Neigungswinkelgeschwindigkeit des Schwebekörpers (20) darstellt, die beim Schaukeln des Schwebekörpers aufgrund der Ausführung des Steuerungsmodus erzeugt wird, wobei die natürliche Schwebekörper-Schaukelperiode eine Periode einer selbst angeregten Schwingung des Schwebekörpers ist, die aufgrund der Ausführung des Steuerungsmodus erzeugt wird.

## Revendications

1. Appareil de génération d'énergie éolienne de type à corps flottant (1) comprenant :

un corps flottant (20) ; un générateur d'éolienne (10) dressé sur le corps flottant (20), le générateur d'éolienne (10) comprenant un rotor (13) ayant un moyeu (14) et une aube (15) montée sur le moyeu (14) ; une unité de commande (50) pouvant exécuter un mode de commande dans lequel un angle de calage de l'aube (15) est commandé de sorte qu'une vitesse de rotation du rotor (13) est maintenue à une vitesse de rotation nominale ; et une unité de surveillance (30) pour surveiller la vibration du corps flottant (20), **caractérisé en ce que** l'unité de surveillance (30) est configurée pour détecter une vibration anormale due à l'exécution du mode de commande par l'unité de commande (50), sur la base d'une valeur statistique sur une période pas inférieure à une période naturelle de roulis de corps flottant du corps flottant (20), la valeur statistique étant basée sur une quantité de fluctuation d'une valeur obtenue à partir d'un signal représentant au moins l'un parmi un angle d'inclinaison et une vitesse angulaire d'inclinaison du corps flottant (20), la valeur statistique représentant un composant de fluctuation de l'angle d'inclinaison ou de la vitesse angulaire d'inclinaison du corps flottant (20) généré après le roulis du corps dû à l'exécution du mode de commande, dans lequel la période naturelle de roulis de corps flottant est une période de vibration auto-excitée du corps flottant générée en raison de l'exécution du mode de commande.

2. Appareil de génération d'énergie éolienne de type à corps flottant (1) selon la revendication 1,

dans lequel la quantité de fluctuation est obtenue à partir d'une différence entre la valeur et une moyenne de la valeur sur la période.

3. Appareil de génération d'énergie éolienne de type à corps flottant (1) selon la revendication 1, dans lequel l'unité de surveillance (30) comprend un premier filtre pour éliminer ou réduire un composant d'une période plus longue que la période naturelle de roulis de corps flottant du corps flottant (20) à partir du signal, et dans lequel la quantité de fluctuation est obtenue en traitant la valeur avec le premier filtre.

4. Appareil de génération d'énergie éolienne de type à corps flottant (1) selon l'une quelconque des revendications 1 à 3, dans lequel l'unité de surveillance (30) est configurée pour détecter la vibration anormale due à l'exécution du mode de commande par l'unité de commande (50), sur la base d'une valeur statistique sur une période pas inférieure à une période naturelle de roulis de corps flottant du corps flottant (20), la valeur statistique étant basée sur une quantité de fluctuation d'une période obtenue à partir d'un signal représentant au moins l'un parmi l'angle d'inclinaison ou la vitesse angulaire d'inclinaison du corps flottant (20) dans une direction avant - arrière du générateur d'éolienne (10).

5. Appareil de génération d'énergie éolienne de type à corps flottant (1) selon l'une quelconque des revendications 1 à 4, dans lequel la valeur statistique est « σ » représentée par l'équation suivante (A) :

$$\sigma = \frac{1}{N}\left\{\sum_{i=1}^{N}|xa_i|^n\right\}^{\frac{1}{n}} \qquad ... (A)$$

où $xa_i$ est la quantité de fluctuation de la valeur représentant l'angle d'inclinaison ou la vitesse angulaire d'inclinaison du corps flottant (20), et N est le nombre de données de $xa_i$ pendant la période.

6. Appareil de génération d'énergie éolienne de type à corps flottant (1) selon l'une quelconque des revendications 1 à 5, dans lequel la longueur de la période n'est pas inférieure à 150 secondes et pas supérieure à 3600 secondes.

7. Appareil de génération d'énergie éolienne de type à corps flottant (1) selon l'une quelconque des revendications 1 à 6, dans lequel l'unité de surveillance (30) est configurée pour déterminer que la vibration anormale a eu lieu si la valeur statistique σ sur la période est supérieure à une valeur de seuil $\sigma_{TH}$ variable selon une valeur moyenne de l'angle de calage ou de la vitesse de vent du vent reçu par le rotor (13) sur la période.

8. Appareil de génération d'énergie éolienne de type à corps flottant (1) selon la revendication 5 ou 6, dans lequel l'unité de surveillance (30) est configurée pour déterminer que la vibration anormale a eu lieu si la valeur statistique σ est supérieure à une valeur de seuil, la valeur statistique étant basée sur une différence entre la valeur pendant la période et une valeur représentant l'angle d'inclinaison du corps flottant (20), et dans lequel la valeur de seuil est déterminée pour être dans une plage pas inférieure à 0,5 degré et pas supérieure à 5 degrés, dans lequel l'unité de surveillance (30) est configurée de sorte que la valeur de seuil est variable selon une valeur moyenne de l'angle de calage ou d'une vitesse de vent du vent reçu par le rotor (13) sur la période.

9. Appareil de génération d'énergie éolienne de type à corps flottant (1) selon la revendication 8, dans lequel, dans une région dans laquelle la valeur moyenne de la vitesse de vent n'est pas inférieure à une vitesse de vent nominale du générateur d'éolienne (10), la valeur de seuil est déterminée pour être au maximum à une vitesse de vent $V_1$ qui n'est pas inférieure à la vitesse de vent nominale et pour diminuer avec une augmentation de la vitesse de vent.

10. Appareil de génération d'énergie éolienne de type à corps flottant (1) selon l'une quelconque des revendications 1 à 9, dans lequel l'unité de surveillance (30) comprend un second filtre (34) pour éliminer ou réduire au moins un composant de fréquence d'une vague agissant sur le corps flottant (20) du signal, et est configurée pour détecter la vibration anormale sur la base d'une valeur statistique basée sur la quantité de fluctuation basée sur une valeur obtenue à partir du signal traité par le second filtre (34).

11. Appareil de génération d'énergie éolienne de type à corps flottant (1) selon l'une quelconque des revendications 1 à 10, comprenant en outre :

un capteur (28, 52) pour mesurer une quantité physique représentant au moins l'un parmi l'angle d'inclinaison ou la vitesse angulaire d'inclinaison du corps flottant (20) ; et
une partie d'obtention de signal (32) pour obtenir le signal représentant au moins l'un parmi l'angle d'inclinaison ou la vitesse angulaire d'inclinaison du corps flottant (20), sur la base d'un signal de détection du capteur (28, 52).

12. Appareil de génération d'énergie éolienne de type à corps flottant (1) selon la revendication 11, dans lequel la partie d'obtention de signal (32) est configurée pour calculer, sur la base d'un angle de lacet du générateur d'éolienne (10), une différence angulaire sur une vue en plan entre la direction avant - arrière du générateur d'éolienne (10) et une direction d'inclinaison dans laquelle le capteur (28, 52) réalise la mesure, et pour obtenir le signal dans la direction avant - arrière du générateur d'éolienne (10) provenant du signal de détection du capteur (28, 52) sur la base de la différence angulaire.

13. Appareil de génération d'énergie éolienne de type à corps flottant (1) selon l'une quelconque des revendications 1 à 12,
dans lequel l'unité de surveillance (30) est configurée pour détecter la vibration anormale sur la base de la valeur statistique uniquement lorsque la vitesse de vent du vent reçu par le rotor (13) n'est pas inférieure à la vitesse de vent nominale ou lorsque le mode de commande est exécuté par l'unité de commande (50).

14. Appareil de génération d'énergie éolienne de type à corps flottant (1) selon l'une quelconque des revendications 1 à 13,
dans lequel l'unité de surveillance (30) est configurée pour produire une alarme ou pour transmettre un signal pour arrêter le générateur d'éolienne (10), à l'unité de commande lorsque la vibration anormale est détectée.

15. Procédé pour actionner un appareil de génération d'énergie éolienne de type à corps flottant (1) qui comprend un corps flottant (20) et un générateur d'éolienne (10) dressé sur le corps flottant (20), le générateur d'éolienne (10) comprenant un rotor (13) ayant un moyeu (14) et une aube (15) montée sur le moyeu (14), le procédé comprenant :

une étape de commande de calage (S4) pour exécuter un mode de commande pour commander un angle de calage de l'aube (15) afin de maintenir une vitesse de rotation du rotor (13) à une vitesse de rotation nominale ;
une étape d'obtention de signal (S2) pour obtenir un signal qui représente au moins l'un parmi un angle d'inclinaison et une vitesse d'inclinaison du corps flottant (20) ; et
**caractérisé en ce qu'**il comprend une étape de détection de vibration anormale (S10) pour détecter la vibration anormale due à l'exécution du mode de commande à l'étape de commande d'inclinaison (S4), sur la base d'une valeur statistique sur une période pas inférieure à une période naturelle de roulis de corps flottant du corps flottant (20), la valeur statistique étant basée sur une quantité de fluctuation d'une valeur obtenue à partir du signal obtenu à l'étape d'obtention de signal (S2), la valeur statistique représentant un composant de fluctuation de l'angle d'inclinaison ou de la vitesse angulaire d'inclinaison du corps flottant (20) généré suite au roulis de corps flottant dû à l'exécution du mode de commande,
dans lequel la période naturelle de roulis de corps flottant est une période de vibration auto-excitée du corps flottant générée en raison de l'exécution du mode de commande.

# FIG. 1

# FIG. 2

# FIG. 3

L1    L2

Θ

151    154

15

153

155

152

Blade rotational direction
(Rotor rotational plane)

Upwind ⟵⟶ Downwind

## FIG. 4

# FIG. 5

$\sigma_{TH}$

$\sigma_{TH-Max}$

$\sigma_{TH-Rated}$

Rated $V_1$
wind
velocity

Mean wind velocity in
statistical period T

# FIG. 6

Inclination direction of floating body
to be measured (top view)

Direction orthogonal to
rotor rotational plane

Front-rear
direction of WTG

10

O

90°

Δα

θz

Reference direction

13

12

11

15

Rotor rotational plane

# FIG. 7A

Before filter processing

Inclination angle

Time

# FIG. 7B

After filter processing

Floating-body
sway natural period

Inclination angle

Time

## FIG. 8

START

Obtain inclination angle
of floating body ⟵ S2

Is pitch-angle control
mode executed? ⟵ S4

No

Yes

Calculate mean m of
inclination angle ⟵ S6

Calculate statistical value σ in
statistical period T using m ⟵ S8

σ > threshold σTH? ⟵ S10

No

Yes

Output alarm or stop WTG ⟵ S12

END

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010076557 A

- EP 2469083 A2